# EUROPEAN PATENT SPECIFICATION

(11) **EP 3 586 606 B1**
(45) Date of publication and mention of the grant of the patent: **24.02.2021**
(21) Application number: 17844580.5
(22) Date of filing: 18.12.2017
(51) Int. Cl.: A01G 13/02

(54) **IMPROVED APPLYING AND/OR REMOVING MESH MACHINE FOR FRUIT TREES OR SIMILAR**
VERBESSERTE MASCHINE ZUM ANSETZEN UND/ODER ENTFERNEN EINES NETZES FÜR OBSTBÄUME ODER DERGLEICHEN
MACHINE AMÉLIORÉE POUR APPLIQUER ET/OU RETIRER UN FILET POUR DES ARBRES FRUITIERS OU SIMILAIRES

(30) Priority: 21.02.2017 ES 201730223
(43) Date of publication of application: 01.01.2020
(73) Proprietor: Saflowers & Sadol, S.L., 22520 Huesca (ES); Supreme Taste, S.L, 46791 Valencia (ES)
(72) Inventor: SAGARRA DOLSET, Juan Antonio, 22520 Huesca (ES); VERCHER COMPANY, José, 46791 Valencia (ES)
(74) Representative: Isern Patentes y Marcas S.L.
(86) International application number: PCT/ES2017/070824
(87) International publication number: WO 2018/154155

(56) References cited:
- EP-A1- 2 165 962
- WO-A1-99/25174
- CN-A- 101 855 977
- US-A- 3 589 526
- US-A- 3 791 069
- Smart net system Ltd: "Netting application machine video", youtube, 6 February 2014 (2014-02-06), page 1 pp., XP054978283, Retrieved from the Internet: URL:https://www.youtube.com/watch?v=Gn7GlA ao9XQ [retrieved on 2018-04-23]

## Description

### OBJECT OF THE INVENTION

The present invention application aims to register an improved applying and/or removing mesh machine for fruit trees or similar, which incorporates notable innovations and advantages over the techniques used to date.

More specifically, the invention proposes the development of an improved applying and/or removing mesh machine for fruit trees or similar, which due to the particular arrangement thereof, facilitates the application, positioning and distribution of a protective mesh over fruit trees or similar, against meteorological agents, insects, birds or others.

### BACKGROUND OF THE INVENTION

Different machines intended to apply a protective mesh over fruit trees or similar are known in the current state of the art, for example described at video "Netting application machine video" (www.youtube.com/watch?v=Gn7GIAao9XQ), and patents WO99/25174A1 and US3791069A.

However, in said machines, it is necessary that the rotations, extensions, gathering, etc. are carried out at the output of the cabin thereof.

Furthermore, the rotations and position changes needed to position and gather the mesh are problematic when there are slopes or unevenness in the terrain; therefore, the tractor used must be moved to a flat area without trees in order to make the necessary rotations and several operators will be needed.

The present invention helps to solve the present problem since it makes it possible to carry out all type of movements and position changes without moving to another area and without the need for operators.

### DESCRIPTION OF THE INVENTION

The present invention has been developed with the aim of providing an improved applying and/or removing mesh machine for fruit trees or similar, which comprises a structure or frame secured to a tractor or similar, and said structure in turn comprises two arms symmetrically and perpendicularly extended in the direction of movement of the tractor, a vertical central shaft between both arms, and a moveable upper arm attached to the highest section of the central shaft by means of an articulation system, the ends of said arms also having a mesh winding mechanism mutually therebetween, and the attachment of the upper arm to the central shaft being in such a way that the upper arm has free three-dimensional orientation in space, and the upper arm incorporating along the length thereof at least one eyebolt enabled for passage through the inside of the mesh that is rolled up and wound in the ends of the arms; which is essentially characterized by the fact that the winding mechanism comprises a supporting guide wheel in contact with each side of the winding mechanism itself.

Preferably, the arms are extendable in the improved applying and/or removing mesh machine for fruit trees or similar.

Alternatively, the arms are of a telescopic nature in the improved applying and/or removing mesh machine for fruit trees or similar.

Preferably, the upper arm is extendable in the improved applying and/or removing mesh machine for fruit trees or similar.

Alternatively, the upper arm is of a telescopic nature in the improved applying and/or removing mesh machine for fruit trees or similar.

In addition, the articulation system in the improved applying and/or removing mesh machine for fruit trees or similar comprises a ring gear and secondary gears, the ring gear being simultaneously arranged between the central shaft and a vertical upper auxiliary shaft, said auxiliary shaft being a continuation of the central shaft and articulated, in turn, on the free upper end thereof to the upper arm, the ring gear being concentrically rotational with respect to the axial shaft thereof in the arrangement thereof in the central shaft and joined in the rotation thereof to the auxiliary shaft, and the secondary gears being engaged with the periphery of the ring gear; and at least one of the secondary gears is actuated by an external motor.

In addition, the articulation system in the improved applying and/or removing mesh machine for fruit trees or similar comprises a ring gear arranged in the central shaft and a rail, the ring gear being simultaneously arranged between the central shaft and a vertical upper auxiliary shaft, said auxiliary shaft being a continuation of the central shaft and articulated, in turn, on the free upper end thereof to the upper arm, the ring gear being concentrically rotational with respect to the axial shaft thereof in the arrangement thereof in the central shaft and joined in the rotation thereof to the auxiliary shaft, the rail being engaged with the ring gear, said rail being moveable and actuated in a linear motion.

The present invention facilitates the application, positioning and distribution of a protective mesh over fruit trees or similar, against meteorological agents, insects, birds or others.

Other characteristics and advantages of the improved applying and/or removing mesh machine for fruit trees or similar will be evident from the description of a preferred, but not exclusive embodiment which is illustrated by way of non-limiting example in the drawings which are included, in which:

### BRIEF DESCRIPTION OF THE DRAWINGS

Figure 1 is a schematic perspective view of a preferred embodiment of the improved applying and/or removing mesh machine for fruit trees or similar of the present invention.
Figure 2 is a schematic view of the arrangement of a preferred embodiment of the improved applying and/or removing mesh machine for fruit trees or similar of the present invention in a tractor.
Figures 3, 4, and 5 are sequential indicator schematic views of the operation and service of a preferred embodiment of the improved applying and/or removing mesh machine for fruit trees or similar of the present invention.
Figures 6, 7 and 8 are schematic views of preferred embodiments of the articulation system of the improved applying and/or removing mesh machine for fruit trees or similar of the present invention.
Figure 9 is an indicator schematic view of another option for the operation and service of a preferred embodiment of the improved applying and/or removing mesh machine for fruit trees or similar of the present invention.

### DESCRIPTION OF A PREFERRED EMBODIMENT

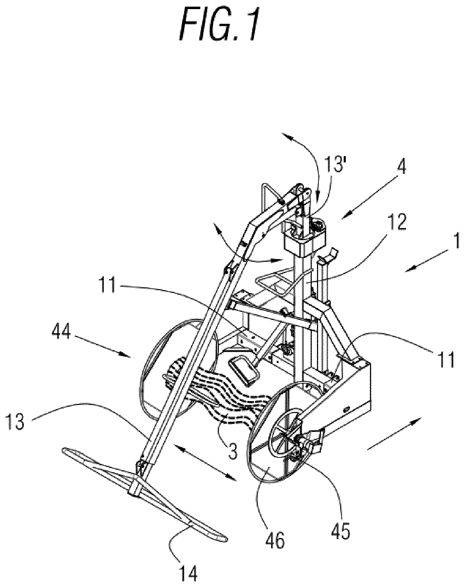

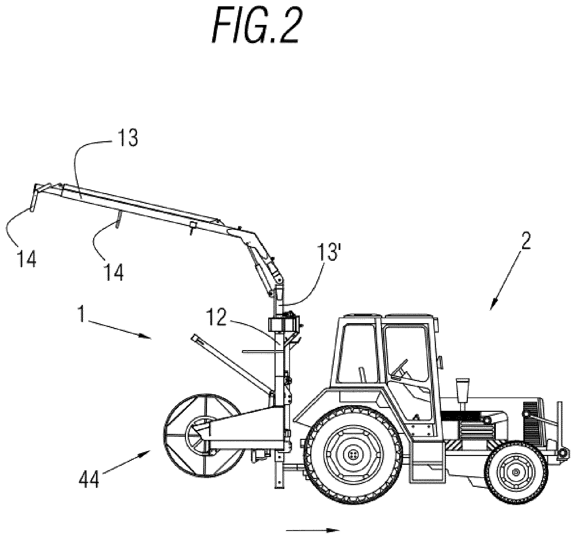

As schematically shown in Figures 1 and 2, the improved applying and/or removing mesh machine for fruit trees or similar of the present invention comprises a structure 1 or frame secured to a tractor 2 or similar, of those usually used in labor and agricultural activities.

Said structure 1 comprises, in turn, two arms 11 symmetrically, horizontally and perpendicularly extended in the direction of movement of the tractor 2, indicated with an arrow in Figures 1 and 2.

The same structure 1 further comprises a vertical central shaft 12 arranged between both arms 11, and a moveable upper arm 13 similar to a pole and attached to the highest section of said central shaft 12.

The ends of said arms 11 have a mesh 3 winding mechanism 44 mutually therebetween, as shown in Figure 1. The arms 11 are also extendable in the direction indicated by the arrows in Figure 1 and are of a telescopic nature, which allows different amplitudes in the winding of the mesh 3.

The winding mechanism 44 comprises a small supporting guide wheel 45 in contact with each side 46 of the winding mechanism 44 itself, as shown in Figure 1. With this, it allows the rotation thereof to be more stable and sudden movements are not produced in the winding mechanism 44 itself, as occurs in other machines in the state of the art.

Said mesh 3 is represented as a thick dotted line in the figures so that it can be seen better.

The attachment of the upper arm 13 to the central shaft 12 is carried out by an articulation system 4, which implies that the upper arm 13 may have free three-dimensional orientation in space, as indicated by the rotational arrows in Figure 1, thus ensuring that the attachment point thereof is secured to the same central shaft 12.

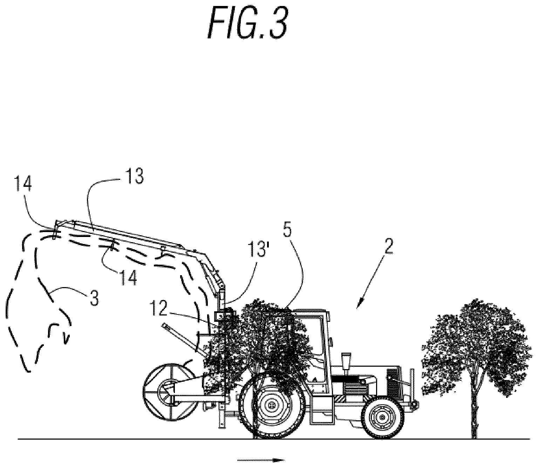

Said upper arm 13 incorporates along the length thereof at least one eyebolt 14 enabled for passage through the inside of the mesh 3 rolled up and wound in the ends of the arms 11, as seen better in Figures 2 and 3.

Furthermore, the upper arm 13 is extendable and of a telescopic nature.

In the operation and service of the improved applying and/or removing mesh machine for fruit trees or similar of the present invention, the mesh 3 is previously wound and rolled up between the arms 11, as shown in Figure 1.

The end of the rolled up mesh 3 is circulated through the eyebolts 14 of the upper arm 13 until it hangs from the free end of the upper arm 13, as shown in Figure 3.

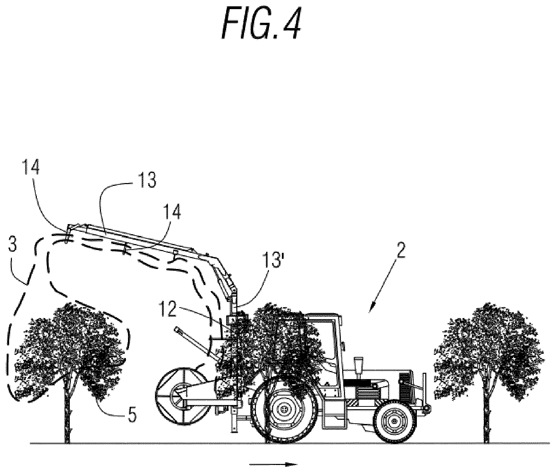

Next, the tractor 2 is moved between the rows of fruit trees in the direction indicated by the arrows in Figures 3 and 4 until the end of the mesh 3 hanging from the upper arm 13 is crimped on the first tree 5 and thus covers it, as shown sequentially in Figures 3 and 4.

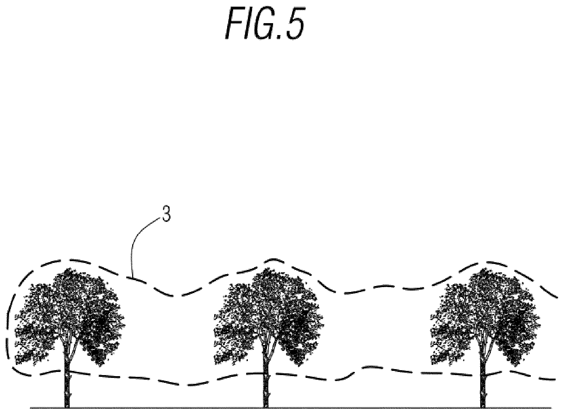

The tractor 2 continues to move between the rows of trees, and when the end of the mesh 3 is crimped on the first tree 5, the movement of the tractor 2 involves unrolling the mesh 3, passing it through the eyebolts 14 of the upper arm 13 and extending it along the row of trees and thus covering them, so that the mesh 3 ultimately covers a row of trees as shown in Figure 5.

The aforementioned articulation system 4 of the improved applying and/or removing mesh machine for fruit trees or similar of the present invention may have different preferred embodiments.

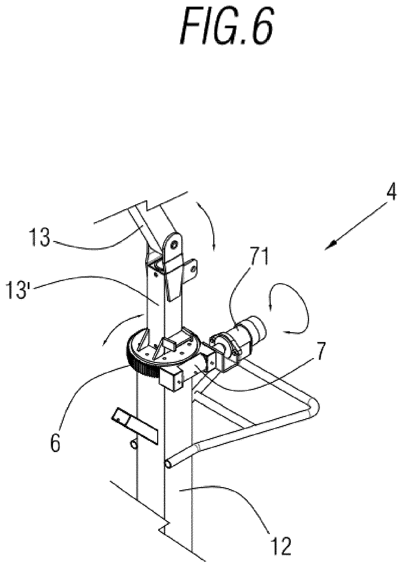

One possible preferred embodiment of the articulation system 4 is schematically shown in Figure 6.

In this figure, it can be seen how the articulation system 4 comprises a ring gear 6 arranged in the central shaft 12, such that said axial shaft of said ring gear 6 coincides with the same central shaft 12. Said ring gear 6 is concentrically rotational with respect to the axial shaft thereof in the arrangement thereof in the central shaft 12, by means of, for example, bearings arranged in its interior.

In this preferred embodiment, as also shown in Figure 6, the articulation system 4 further comprises a spindle-screw 7 engaged with the ring gear 7.

Said spindle-screw 7 is actuated in a rotational movement on the axial shaft thereof and indicated by the arrow in Figure 6, by means of an external motor. This means that the ring gear 6 carries out a concentric rotational movement with the axial shaft thereof and indicated by the arrows in the same Figure 6.

The ring gear 6 is simultaneously arranged between the central shaft 12 and a vertical upper auxiliary shaft 13'. Said auxiliary shaft 13' is arranged as a continuation of the central shaft 12 and is, in turn, articulated on the upper end thereof to the upper arm 13.

The actuation of the spindle-screw 7 involves the rotation of the ring gear 6, and therefore also of the auxiliary shaft 13' in the angular direction represented by the arrows in Figure 6; in other words, a concentric direction around the central shaft 12, which therefore further entails the rotation of the upper arm 13 in that same direction. In addition, the articulation of the upper arm 13 in the auxiliary shaft 13' enables the rotation of said upper arm 13 in the other rotational direction, also indicated by the arrows in Figure 6 and perpendicular to the previous direction.

This preferred embodiment of the articulation system 4 described in Figure 6 therefore also enables the upper arm 13 to have free three-dimensional orientation in space.

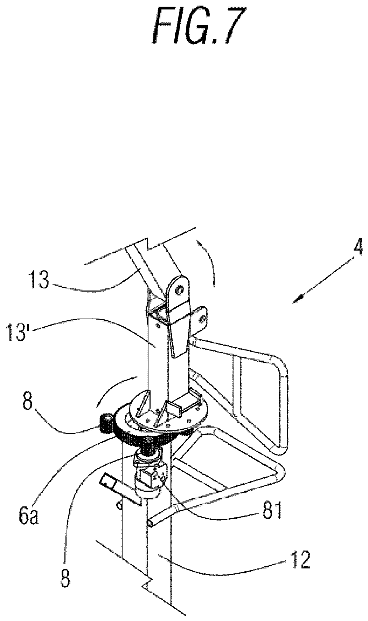

Another possible preferred embodiment of the articulation system 4 is schematically shown in Figure 7. In this figure, it can be seen how the articulation system 4 comprises a ring gear 6a simultaneously arranged between the central shaft 12 and a vertical upper auxiliary shaft 13'. Said auxiliary shaft 13' is arranged as a continuation of the central shaft 12 and is, in turn, articulated on the upper end thereof to the upper arm 13.

The ring gear 6a is concentrically rotational with respect to the axial shaft thereof in the arrangement thereof in the central shaft 12, by means of, for example, bearings arranged in its interior, and it is joined in the rotation thereof to the auxiliary shaft 13'.

The articulation system 4 further comprises secondary gears 8 that engage with the periphery of the ring gear 6a, and one of the secondary gears 8 is actuated by an external motor 81, as shown in Figure 7.

The actuation of the secondary gear 8 actuated by the motor 81 involves the rotation of the ring gear 6a, and therefore also of the auxiliary shaft 13' in the angular direction represented by the arrows in Figure 7; in other words, a concentric direction around the central shaft 12, which therefore further entails the rotation of the upper arm 13 in that same direction. In addition, the articulation of the upper arm 13 in the auxiliary shaft 13' enables the rotation of said upper arm 13 in the other rotational direction, also indicated by the arrows in Figure 7 and perpendicular to the previous direction.

In Figure 7 used in the description, the auxiliary shaft 13' is moved slightly to the right of the position thereof in order to better show the elements and operation of the articulation system 4.

This preferred embodiment of the articulation system 4 described in Figure 7 therefore also enables the upper arm 13 to have free three-dimensional orientation in space.

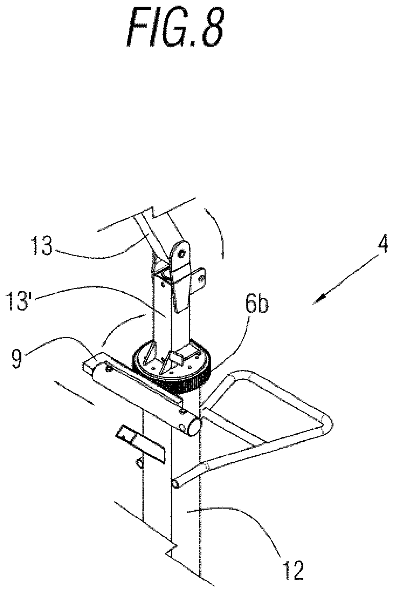

Another possible preferred embodiment of the articulation system 4 is schematically shown in Figure 8. In this figure, it can be seen how the articulation system 4 comprises a ring gear 6b arranged in the central shaft 12, such that said axial shaft of said ring gear 6b coincides with the same central shaft 12. Said ring gear 6b is concentrically rotational with respect to the axial shaft thereof in the arrangement thereof in the central shaft 12, by means of, for example, bearings arranged in its interior.

In this preferred embodiment, as also shown in Figure 8, the articulation system 4 further comprises a rail 9 engaged with the ring gear 6b.

Said rail 9 is actuated in a linear motion and indicated by the arrow in Figure 8. This means that the ring gear 6b carries out a concentric rotational movement with the axial shaft thereof and indicated by the arrows in the same Figure 8.

Similar to the previous preferred embodiment, the ring gear 6b is simultaneously arranged between the central shaft 12 and a vertical upper auxiliary shaft 13'. Said auxiliary shaft 13' is arranged as a continuation of the central shaft 12 and is, in turn, articulated on the upper end thereof to the upper arm 13.

The actuation of the rail 9 involves the rotation of the ring gear 6b, and therefore also of the auxiliary shaft 13' in the angular direction represented by the arrows in Figure 8; in other words, a concentric direction around the central shaft 12, which therefore further entails the rotation of the upper arm 13 in that same direction. In addition, the articulation of the upper arm 13 in the auxiliary shaft 13' enables the rotation of said upper arm 13 in the other rotational direction, also indicated by the arrows in Figure 8 and perpendicular to the previous direction.

This other preferred embodiment of the articulation system 4 described in Figure 8 therefore also enables the upper arm 13 to have free three-dimensional orientation in space.

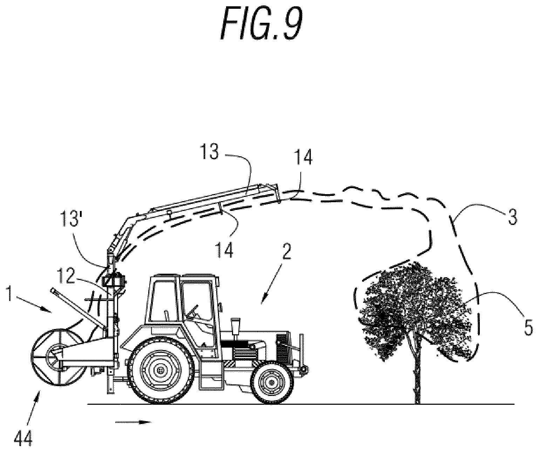

Thanks to the articulation system 4, the improved applying and/or removing mesh machine for fruit trees or similar of the present invention is also designed to be used for removing the same mesh 3 from the position thereof covering a row of trees. In this case, a position of the arm 13 as shown in Figure 9, positioned on the tractor 2 and turned towards the direction of travel thereof, shown by the arrow in Figure 9, is more effective.

The tractor 2 continues moving between the rows of trees, and the mesh 3 is circulated and passed through the eyebolts 14 of the upper arm 13 and rolled up and wound again in the winding mechanism 44.

In this possible use, only one operator is necessary who can direct all the necessary movements from the cabin of the tractor.

In the improved applying and/or removing mesh machine for fruit trees or similar of the present invention, the different movements and actions for rotating the articulation system 4 are generated by means known in the state of the art and are controlled from inside the cabin of the tractor 2.

The details, shapes, dimensions and other accessory elements, as well as the materials used to manufacture the improved applying and/or removing mesh machine for fruit trees or similar of the invention, may be suitably substituted for others which are technically equivalent, and do not diverge from the essential nature of the invention, nor the scope defined by the claims included below.

## Claims

1. An improved applying and/or removing mesh machine for fruit trees or similar, that comprises a structure (1) or frame secured to a tractor (2) or similar, and said structure (1) in turn comprises two arms (11) symmetrically and perpendicularly extended in the direction of movement of the tractor (2), a vertical central shaft (12) between both arms (11), and a moveable upper arm (13) attached to the highest section of the central shaft (12) by means of an articulation system (4), the ends of said arms (11) also having a mesh (3) winding mechanism (44) mutually therebetween, and the attachment of the upper arm (13) to the central shaft (12) being in such a way that the upper arm (13) has free three-dimensional orientation in space, and the upper arm (13) incorporating along the length thereof at least one eyebolt (14) enabled for passage through the inside of the mesh (3) that is rolled up and wound in the ends of the arms (11); **characterized by** the fact that the winding mechanism (44) comprises a small supporting guide wheel (45) in contact with each side (46) of the winding mechanism (44) itself.

2. The improved applying and/or removing mesh machine for fruit trees or similar according to claim 1, **characterized by** the fact that the arms (11) are extendable.

3. The improved applying and/or removing mesh machine for fruit trees or similar according to claim 2, **characterized by** the fact that the arms (11) are of a telescopic nature.

4. The improved applying and/or removing mesh machine for fruit trees or similar according to claim 1, **characterized by** the fact that the upper arm (13) is extendable.

5. The improved applying and/or removing mesh machine for fruit trees or similar according to claim 4, **characterized by** the fact that the upper arm (13) is of a telescopic nature.

6. The improved applying and/or removing mesh machine for fruit trees or similar according to claim 1, **characterized by** the fact that the articulation system (4) comprises a ring gear (6) arranged in the central shaft (12) and a spindle-screw (7), the ring gear (6) being simultaneously arranged between the central shaft (12) and a vertical upper auxiliary shaft (13'), said auxiliary shaft (13') being a continuation of the central shaft (12) and articulated, in turn, on the free upper end thereof to the upper arm (13), the ring gear (6) being concentrically rotational with respect to the axial shaft thereof in the arrangement thereof in the central shaft (12) and joined in the rotation thereof to the auxiliary shaft (13'), the spindle-screw (7) being engaged with the ring gear (6), said spindle-screw (7) being operated in a rotation around the axial shaft thereof.

7. The improved applying and/or removing mesh machine for fruit trees or similar according to claim 1, **characterized by** the fact that the articulation system (4) comprises a ring gear (6a) and secondary gears (8), the ring gear (6a) being simultaneously arranged between the central shaft (12) and a vertical upper auxiliary shaft (13'), said auxiliary shaft (13') being a continuation of the central shaft (12) and articulated, in turn, on the free upper end thereof to the upper arm (13), the ring gear (6a) being concentrically rotational with respect to the axial shaft thereof in the arrangement thereof in the central shaft (12) and joined in the rotation thereof to the auxiliary shaft (13'), and the secondary gears (8) being engaged with the periphery of the ring gear (6a), and at least one of the secondary gears (8) is operated by an external motor (81).

8. The improved applying and/or removing mesh machine for fruit trees or similar according to claim 1, **characterized by** the fact that the articulation system (4) comprises a ring gear (6b) arranged in the central shaft (12) and a rail (9), said ring gear (6b) being simultaneously arranged between the central shaft (12) and a vertical upper auxiliary shaft (13'), said auxiliary shaft (13') being a continuation of the central shaft (12) and articulated, in turn, on the free upper end thereof to the upper arm (13), the ring gear (6b) being concentrically rotational with respect to the axial shaft thereof in the arrangement thereof in the central shaft (12) and joined in the rotation thereof to the auxiliary shaft (13'), the rail (9) being engaged with the ring gear (6b), said rail (9) being movable and operated in linear movement.

## Patentansprüche

1. Verbesserte Maschine zum Anbringen und/oder Entfernen von Netzen für Obstbäume oder ähnliches, die eine Struktur (1) oder einen Rahmen umfasst, der an einem Traktor (2) oder ähnlichem befestigt ist, und die Struktur (1) wiederum zwei Arme (11) umfasst, die symmetrisch und senkrecht in der Bewegungsrichtung des Traktors (2) ausgezogen sind, eine vertikale Mittelwelle (12) zwischen beiden Armen (11) und einen beweglichen oberen Arm (13), der mittels eines Gelenksystems (4) am höchsten Abschnitt der Mittelwelle (12) angebracht ist, wobei die Enden der Arme (11) auch einen Netz (3)-Wickelmechanismus (44) jeweils dazwischen aufweisen, und die Befestigung des oberen Arms (13) an der Mittelwelle (12) derart ist, dass der obere Arm (13) eine freie dreidimensionale Orientierung im Raum aufweist und der obere Arm (13) entlang seiner Länge mindestens eine Augenschraube (14) integriert, die den Durchgang durch die Innenseite des Netzes (3) ermöglicht, das aufgerollt und in die Enden der Arme (11) gewickelt ist; **dadurch gekennzeichnet, dass** der Wickelmechanismus (44) ein kleines abstützendes Führungsrad (45) in Kontakt mit jeder Seite (46) des Wickelmechanismus (44) selbst umfasst.

2. Verbesserte Maschine zum Anbringen und/oder Entfernen von Netzen für Obstbäume oder ähnliches nach Anspruch 1, **dadurch gekennzeichnet, dass** die Arme (11) ausziehbar sind.

3. Verbesserte Maschine zum Anbringen und/oder Entfernen von Netzen für Obstbäume oder ähnliches nach Anspruch 2, **dadurch gekennzeichnet, dass** die Arme (11) teleskopischer Natur sind.

4. Verbesserte Maschine zum Anbringen und/oder Entfernen von Netzen für Obstbäume oder ähnliches nach Anspruch 1, **dadurch gekennzeichnet, dass** der obere Arm (13) ausziehbar ist.

5. Verbesserte Maschine zum Anbringen und/oder Entfernen von Netzen für Obstbäume oder ähnliches nach Anspruch 4, **dadurch gekennzeichnet, dass** der obere Arm (13) von teleskopischer Natur ist.

6. Verbesserte Maschine zum Anbringen und/oder Entfernen von Netzen für Obstbäume oder ähnliches nach Anspruch 1, **dadurch gekennzeichnet, dass** das Gelenksystem (4) einen Zahnkranz (6) umfasst, der in der Mittelwelle (12) angeordnet ist, und eine Spindelschraube (7), wobei der Zahnkranz (6) gleichzeitig zwischen der Mittelwelle (12) und einer vertikalen oberen Hilfswelle (13') angeordnet ist, wobei die Hilfswelle (13') eine Fortsetzung der Mittelwelle (12) ist und wiederum am freien oberen Ende davon an den oberen Arm (13) angelenkt ist, wobei der Zahnkranz (6) konzentrisch drehbar in Bezug auf die Axialwelle davon in der Anordnung davon in der Mittelwelle (12) ist und in Drehung davon mit der Hilfswelle (13') zusammengefügt ist, wobei die Spindelschraube (7) mit dem Zahnkranz (6) in Eingriff ist, wobei die Spindelschraube (7) in einer Drehung um die Axialwelle davon betrieben wird.

7. Verbesserte Maschine zum Anbringen und/oder Entfernen von Netzen für Obstbäume oder ähnliches nach Anspruch 1, **dadurch gekennzeichnet, dass** das Gelenksystem (4) einen Zahnkranz (6a) und sekundäre Zahnräder (8) umfasst, wobei der Zahnkranz (6a) gleichzeitig zwischen der Mittelwelle (12) und einer vertikalen oberen Hilfswelle (13') angeordnet ist, wobei die Hilfswelle (13') eine Fortsetzung der Mittelwelle (12) ist und wiederum am freien oberen Ende davon an den oberen Arm (13) angelenkt ist, wobei der Zahnkranz (6a) konzentrisch drehbar in Bezug auf die Axialwelle davon in der Anordnung davon in der Mittelwelle (12) ist und in Drehung davon mit der Hilfswelle (13') zusammengefügt ist, und wobei die sekundären Zahnräder (8) mit dem Umfang des Zahnkranzes (6a) in Eingriff sind und mindestens eines der sekundären Zahnräder (8) durch einen externen Motor (81) betrieben wird.

8. Verbesserte Maschine zum Anbringen und/oder Entfernen von Netzen für Obstbäume oder ähnliches nach Anspruch 1, **dadurch gekennzeichnet, dass** das Gelenksystem (4) einen Zahnkranz (6b) umfasst, der in der Mittelwelle (12) angeordnet ist, und eine Schiene (9), wobei der Zahnkranz (6b) gleichzeitig zwischen der Mittelwelle (12) und einer vertikalen oberen Hilfswelle (13') angeordnet ist, wobei die Hilfswelle (13') eine Fortsetzung der Mittelwelle (12) ist und wiederum am freien oberen Ende davon an den oberen Arm (13) angelenkt ist, wobei der Zahnkranz (6b) konzentrisch drehbar in Bezug auf die Axialwelle davon in der Anordnung davon in der Mittelwelle (12) ist und in Drehung davon mit der Hilfswelle (13') zusammengefügt ist, wobei die Schiene (9) mit dem Zahnkranz (6b) in Eingriff steht, wobei die Schiene (9) beweglich ist und in einer Linearbewegung betrieben wird.

## Revendications

1. Machine améliorée d'application et/ou de retrait de maille pour arbres fruitiers ou similaires, qui comprend une structure (1) ou un châssis fixé à un tracteur (2) ou similaire, et ladite structure (1) comprend à son tour deux bras (11) étendus symétriquement et perpendiculairement dans la direction de déplacement du tracteur (2), un arbre central vertical (12) entre les deux bras (11), et un bras supérieur mobile (13) relié à la section la plus élevée de l'arbre central (12) au moyen d'un système d'articulation (4), les extrémités desdits bras (11) ayant également un mécanisme d'enroulement (44) de maille (3) mutuellement entre elles, et la liaison du bras supérieur (13) à l'arbre central (12) étant de telle manière que le bras supérieur (13) a une orientation tridimensionnelle libre dans l'espace, et le bras supérieur (13) incorporant sur sa longueur au moins un boulon à œil (14) pouvant passer à travers l'intérieur de la maille (3) qui est roulée et enroulée dans les extrémités des bras (11) ; **caractérisé par le fait que** le mécanisme d'enroulement (44) comprend une petite roue porteuse de guidage (45) en contact avec chaque côté (46) du propre mécanisme d'enroulement (44).

2. Machine améliorée d'application et/ou de retrait de maille pour arbres fruitiers ou similaires selon la revendication 1, **caractérisée par le fait que** les bras (11) sont extensibles.

3. Machine améliorée d'application et/ou de retrait de maille pour arbres fruitiers ou similaires selon la revendication 2, **caractérisée par le fait que** les bras (11) sont de nature télescopique.

4. Machine améliorée d'application et/ou de retrait de maille pour arbres fruitiers ou similaires selon la revendication 1, **caractérisée par le fait que** le bras supérieur (13) est extensible.

5. Machine améliorée d'application et/ou de retrait de maille pour arbres fruitiers ou similaires selon la revendication 4, **caractérisée par le fait que** le bras supérieur (13) est de nature télescopique.

6. Machine améliorée d'application et/ou de retrait de maille pour arbres fruitiers ou similaires selon la revendication 1, **caractérisée par le fait que** le système d'articulation (4) comprend un couronne dentée (6) disposée dans l'arbre central (12) et une vis à broche (7), la couronne dentée (6) étant disposée simultanément entre l'arbre central (12) et un arbre auxiliaire supérieur vertical (13'), ledit arbre auxiliaire (13') étant un prolongement de l'arbre central (12) et articulé, à son tour, sur son extrémité supérieure libre au bras supérieur (13), la couronne dentée (6) étant rotative concentriquement par rapport à son arbre axial dans sa disposition dans l'arbre central (12) et jointe dans sa rotation à l'arbre auxiliaire (13'), la vis à broche (7) étant en prise avec la couronne dentée (6), ladite vis à broche (7) étant actionnée en rotation autour de son arbre axial.

7. Machine améliorée d'application et/ou de retrait de maille pour arbres fruitiers ou similaires selon la revendication 1, **caractérisée par le fait que** le système d'articulation (4) comprend une couronne dentée (6a) et des engrenages secondaires (8), la couronne dentée (6a) étant disposée simultanément entre l'arbre central (12) et un arbre auxiliaire supérieur vertical (13'), ledit arbre auxiliaire (13') étant un prolongement de l'arbre central (12) et articulé, à son tour, sur son extrémité supérieure libre au bras supérieur (13), la couronne dentée (6a) étant rotative concentriquement par rapport à son arbre axial dans sa disposition dans l'arbre central (12) et jointe dans sa rotation à l'arbre auxiliaire (13'), et les engrenages secondaires (8) étant en prise avec la périphérie de la couronne dentée (6a), et au moins l'un des engrenages secondaires (8) est actionné par un moteur externe (81).

8. Machine améliorée d'application et/ou de retrait de maille pour arbres fruitiers ou similaires selon la revendication 1, **caractérisée par le fait que** le système d'articulation (4) comprend une couronne dentée (6b) disposée dans l'arbre central (12) et une glissière (9), ladite couronne dentée (6b) étant disposée simultanément entre l'arbre central (12) et un arbre auxiliaire supérieur vertical (13'), ledit arbre auxiliaire (13') étant un prolongement de l'arbre central (12) et articulé, à son tour, sur son extrémité supérieure libre au bras supérieur (13), la couronne dentée (6b) étant rotative concentriquement par rapport à son arbre axial dans sa disposition dans l'arbre central (12) et jointe dans sa rotation à l'arbre auxiliaire (13'), la glissière (9) étant en prise avec la couronne dentée (6b), ladite glissière (9) étant mobile et actionnée en déplacement linéaire.
